# EUROPEAN PATENT SPECIFICATION

(11) **EP 2 463 184 B1**
(45) Date of publication and mention of the grant of the patent: **25.02.2015**
(21) Application number: 11188726.1
(22) Date of filing: 11.11.2011
(51) Int. Cl.: B62J 6/04, B62J 17/00, B62J 99/00

(54) **Motorcycle**
Motorrad
Motocyclette

(30) Priority: 08.12.2010 JP 2010273818
(43) Date of publication of application: 13.06.2012
(73) Proprietor: Yamaha Hatsudoki Kabushiki Kaisha, Shizuoka-ken 438-8501 (JP)
(72) Inventor: Kitaura, Toshiaki, Shizuoka, 438-8501 (JP)
(74) Representative: Stöckeler, Ferdinand

(56) References cited:
- EP-A2- 1 063 153
- US-A1- 2007 230 198

## Description

### BACKGROUND OF THE INVENTION

### Field of the Invention

The present invention relates to motorcycles. More particularly, the present invention relates to the structure of a rear portion of a motorcycle.

### Description of the Background Art

Scooter-type motorcycles are widely known. A scooter includes a footboard located forward of the seat. The rider can place his feet on the footboard and drive the vehicle in a relaxed position.

A scooter includes a swing-type power unit. The power unit includes an engine and a transmission device and can swing vertically together with the rear wheel. A space is provided above the rear wheel, between the rear wheel and the vehicle body to allow the power unit and the rear wheel to swing.

JP2005-145202A and JP2001-310778A each disclose a scooter-type motorcycle.

JP2005-145202A teaches a scooter with side covers each having a lower edge that extends rearward and upward above the rear wheel. A taillight unit is attached to the rear ends of the side covers. The rear ends of the side covers and the rear end of the taillight unit extend upward and rearward.

JP2001-310778A teaches a scooter with side covers each having a lower edge that extends generally horizontally rearward above the rear wheel. The rear end of each side cover forms a curve and extends forward and upward.

EP 1 063 153 A2 describes a motorcycle according to the preamble of claim 1, having an arrangement of a damper for controlling opening and closing movement of a vehicle seat capable of effecting an increased sectional area of the opening of the container box. The vehicle has a main seat adapted to open and close a container box. The main seat is pivotally connected to the container box by a hinge pin provided at the forward end of the seat. A gas damper is disposed forwardly of said container box in the longitudinal direction, and the damper is connected at one end to said main seat in the vicinity of said hinge, and at the other end to a body frame.

US 2007/230198 A1 describes a vehicle having a light unit which includes a lens, shadow-forming surface, and a shadow casting surface. Outside light entering the light unit is at least partially blocked by the shadow casting surface so as to cast a shadow on the shadow-forming surface. The shadow casting surface may be embedded within or on a surface of the lens or otherwise supported above the shadow forming surface. The shadow casting design is preferably spaced from the shadow-forming surface.

### SUMMARY OF THE INVENTION

An object of the present invention is to provide a motorcycle where a compact vehicle body can be achieved and, at the same time, a certain length of the seat and an easy to grip rear bar can be ensured.

This object is achieved by a motorcycle of claim 1.

A motorcycle of the present embodiment includes: a seat; a rear wheel capable of swinging in a vertical direction; and side covers that each cover a vehicle body side below the seat and above the rear wheel. The motorcycle includes: a license plate bracket that extends downward from lower edges of the side covers; a taillight unit disposed rearward of rear ends of the side covers; and a rear bar disposed at least in part rearward of the seat and at least in part above the taillight unit. Each of the lower edges of the rear ends of the side covers is positioned at a height where it does not overlap the rear wheel in a side view. Each of the rear ends of the side covers extends forward and upward from the lower end of the rear end in a side view, and a rear portion of the seat overlaps a front portion of the taillight unit in a plan view.

A compact rear portion of the vehicle body can be achieved, while the lower end of the rear end of each side cover can be positioned at a height where it does not overlap the rear wheel in a side view. A great length of the seat in the front-rear direction can be ensured while the rear portion of the vehicle body remains relatively compact. A certain width of the region between the side covers and the rear bar in the vertical direction can be ensured to make the rear bar easy to grip while the rear portion remains relatively compact.

Accordingly, the invention is advantageous when compared to the scooter taught in JP2005-145202A, in which the lower edge of each side cover extends rearward and upward above the rear wheel. Further, the rear end of each side cover extends rearward and upward. As such, in the scooter of JP2005-145202A, the rear portion of the vehicle body is relatively large. Moreover, in the scooter of JP2005-145202A, the rear portion of each side cover extends upward such that the space in the vertical direction between the rear bar attached to the rear of the seat and the side covers is relatively small, making the rear bar difficult to grip.

Accordingly, the invention is advantageous when compared to the scooter taught in JP2001-310778A, in which the rear end of each side cover forms a curve and extends forward and upward. As a result, the rear end of the seat is located comparatively forward of the rear end of the vehicle. As such, the length of the seat in the front-rear direction is relatively small.

Other features, elements, steps, characteristics and advantages of the present invention will become more apparent from the following detailed description of the preferred embodiments of the present invention with reference to the attached drawings, in which:

### BRIEF DESCRIPTION OF THE DRAWINGS

FIG. 1 is a left side view of a motorcycle according to the present embodiment;
FIG. 2 is a plan view of the motorcycle according to the present embodiment;
FIG. 3 is a front view of the motorcycle according to the present embodiment;
FIG. 4 is a rear view of the motorcycle according to the present embodiment;
FIG. 5 is a left side view of the rear portion of the vehicle;
FIG. 6 is a left side view of the rear portion of the vehicle with the rear bar removed;
FIG. 7 is a perspective view of the rear portion of the vehicle as viewed from the left rear;
FIG. 8 is a left side cross sectional view of the taillight unit;
FIG. 9 is a cross sectional view taken along line IX-IX of FIG. 5;
FIG. 10 is a cross sectional view taken along line X-X of FIG. 5; and
FIG. 11 illustrates features of the motorcycle of the present embodiment.

### DETAILED DESCRIPTION OF THE PREFERRED EMBODIMENTS

The inventor of the motorcycle of the present embodiment attempted to find out how to make a compact rear portion of a scooter-type motorcycle.

A scooter-type motorcycle includes a swing-type power unit. The power unit is vertically swingable together with the rear wheel. To prevent contact of the swinging rear wheel and the vehicle body, a space is required between the uppermost point of the rear wheel and the lower edges of the side covers of the vehicle body. Accordingly, the lower edge of each side cover is positioned at a certain height, and the rear portion of the vehicle body is raised upward as it extends rearward.

Further, a license plate (number plate) bracket is provided at the rear of the vehicle body. A license plate is attached to the license plate bracket and extends downward from the lower edges of the side covers. If the positions of the license plate bracket and the swinging rear wheel are taken into consideration, the rear ends of the lower edges of the side covers cannot be positioned forward. Because of this, it was difficult to make a compact rear portion of the vehicle body. Further, side covers raised upward reduce the space in the vertical direction between the rear bar attached rearward of the seat and the side covers, making the rear bar difficult to grip.

If the lower end of the rear end of each side cover is positioned low, a compact rear portion of the vehicle body can be achieved. However, if the swing width of the rear wheel is taken into consideration, the lower end of the rear end of each side cover must be positioned at a certain height, which means a restriction on positioning. Then, the inventor considered a structure in which the rear end of each side cover slopes forward where it extends upward from the lower end position. The inventor assumed that a compact rear portion of the vehicle body can be achieved in this manner. However, if the rear end of each side cover slopes forward and upward, the length of the seat may be too short. To solve this problem, the inventor also considered a structure in which the rear portion of each side cover extends upward from a lower position in the vertical direction. Although such a structure will ensure a certain length of the seat in the front-rear direction, it does not realize a sufficiently compact vehicle body. Also, the rear bar is difficult to grip, similar to a motorcycle with a rear end of each side cover sloping rearward and upward.

There are also motorcycles in which the space for the swinging rear wheel is included inside the vehicle body to allow the lower end of the rear end of each side cover to be positioned low. However, in such a motorcycle, the rear end of each side cover forms a curve and extends forward and upward to follow the shape of the rear wheel. As such, the rear end of the seat is positioned more forward such that the length of the seat in the front-rear direction is relatively short.

The inventor of the motorcycle of the present embodiment came up with a structure of a motorcycle in which the rear end of each side cover slopes forward and upward to achieve a compact vehicle body and ensure a certain length of the seat in the front-rear direction. Specifically, the inventor came up with a structure in which the taillight unit is located rearward of the rear ends of the side covers and the taillight unit overlaps the seat in a plan view.

The inventor of the motorcycle of the present embodiment also came up with a structure of a motorcycle in which the rear end of each side cover slopes forward and upward to achieve a compact vehicle body and make the rear bar easy to grip. Specifically, the inventor came up with a structure in which the taillight unit is located rearward of the rear ends of the side covers and the rear bar is located above the taillight unit. Such a structure will ensure a space in the vertical direction between the rear bar and the side covers and make the rear bar easy to grip.

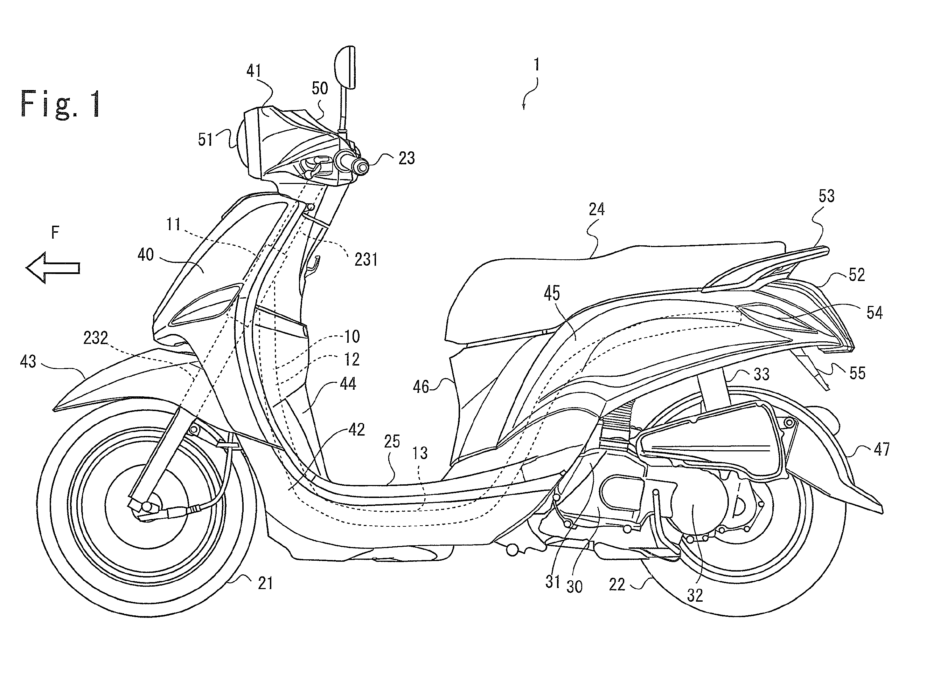

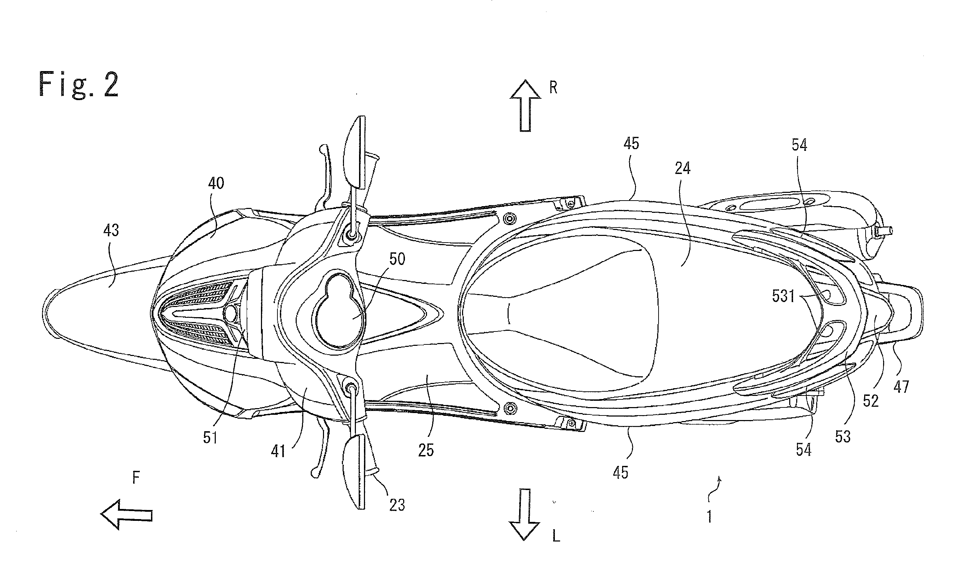

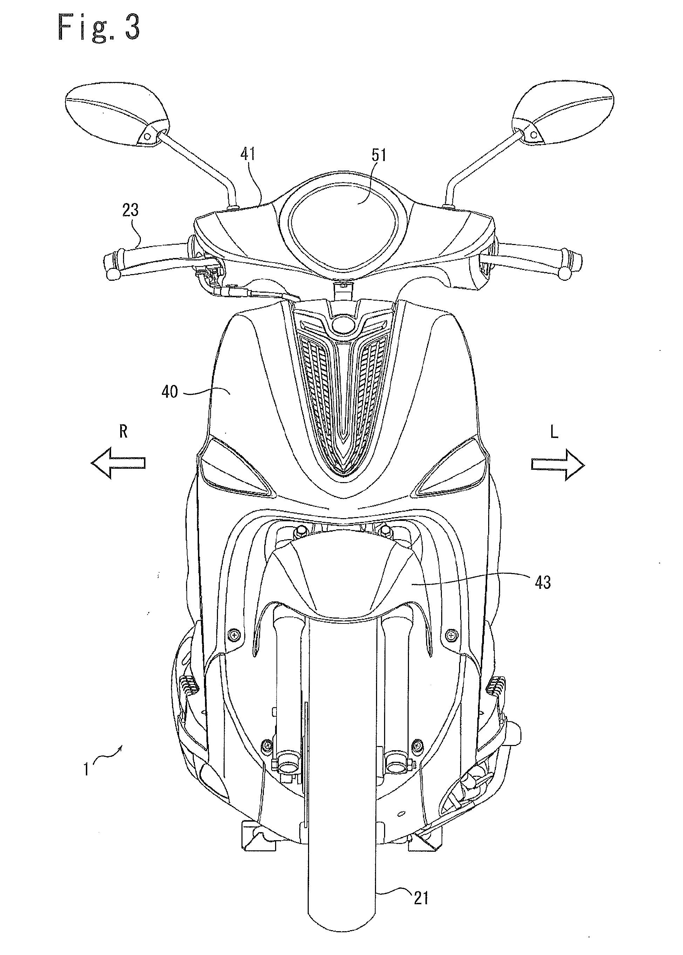

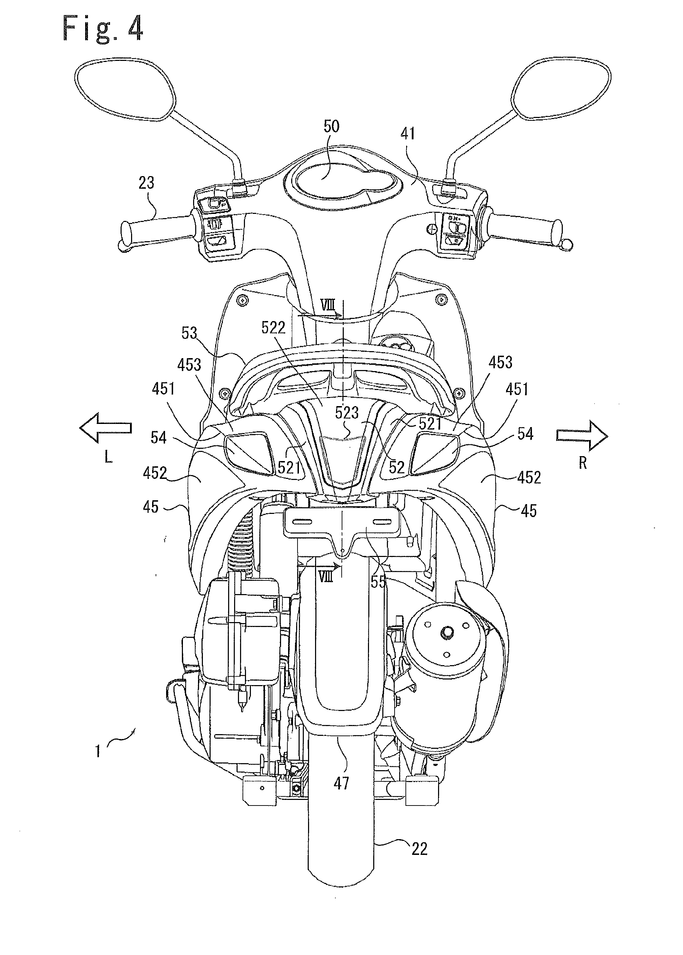

Now, embodiments of the present invention will be described referring to the drawings. FIG. 1 is a left side view of a motorcycle 1 according to the embodiment. The motorcycle 1 of the present embodiment is a so-called scooter-type motorcycle. FIG. 2 is a top view of the motorcycle 1. FIG. 3 is a front view of the motorcycle 1. FIG. 4 is a rear view of the motorcycle 1.

As used in the following description, directions such as forward/front, rear(ward), left or right refer to forward/front, rear(ward), left or right as viewed by a rider sitting on the seat of the motorcycle 1. Arrow F in various drawings indicates the forward/front of the motorcycle 1, while arrows L and R indicate the left and right of the motorcycle 1, respectively.

As shown in FIG. 1, the motorcycle 1 includes a frame 10 that supports the vehicle body. The motorcycle 1 includes a front wheel 21, a rear wheel 22, handlebars 23, a seat 24 and a footboard 25. The motorcycle 1 includes a power unit 30 swingably supported by frame 10.

The frame 10 includes a head pipe 11. The head pipe 11 is disposed in a front portion of the vehicle body. A steering shaft 231 is rotatably inserted into the head pipe 11. The handlebars 23 are supported on the top end of the steering shaft 231. Left and right frames of a front fork 232 are attached to left and right portions of the steering shaft 231. The front wheel 21 is rotatably supported on the lower ends of the front fork frames 232.

A front frame 12 is coupled with a rear portion of the head pipe 11. The front frame 12 extends rearward and downward. Left and right side frames 13 are coupled with the lower end of the front frame 12. The left and right side frames 13 extend rearward below the footboard 25. The side frames 13 further extend rearward and upward. The side frames 13 extend to a position near the top of the rear wheel 22.

The power unit 30 is supported by the side frames 13. The power unit 30 is disposed on the left side of the vehicle. The power unit 30 is supported by the side frames 13 at its front portion and vertically swingable relative to the supported point. The rear wheel 22 is rotatably supported rearward of the power unit 30. Thus, the power unit 30 is vertically swingable together with the rear wheel 22.

A rear cushion unit 33 is provided between the power unit 30 and the side frames 13. The rear cushion unit 33 achieves elastic movements of the rear wheel 22 that swings vertically. Thus, impacts from a contact between the rear wheel 22 and the road surface can be absorbed.

The power unit 30 includes an engine 31 in its front portion. The power unit 30 includes a transmission unit 32 in its rear portion. A rotational driving force output from the engine 31 is transmitted to the rear wheel 22 via the transmission unit 32. A belt-type continuously variable transmission, for example, is contained in the transmission unit 32.

A front portion of the head pipe 11 is covered with a front cover 40. As shown in FIG. 2, a handle cover 41 is attached above the front cover 40. The handle cover 41 covers the handlebars 23. A meter panel 50 that displays a speedometer and a fuel gauge is disposed in a rear portion of the handle cover 41.

As shown in FIG. 3, a headlight 51 is disposed at the center of the front portion of the handle cover 41. The handle cover 41 extends to the left and right from the position of the headlight 51. The handlebars 23 are disposed inside the handle cover 41. The grips of the handlebars 23 are exposed from the left and right ends of the handle cover 41 to the outside of the cover.

Returning to FIG. 1, an inner fender 42 is attached below the front cover 40. The inner fender 42 covers a rear portion of the front wheel 21. A front fender 43 is disposed above the front wheel 21. The front fender 43 follows the rotating movement of the handlebars 23 and is rotated together with the handlebars 23.

An inner cover 44 is disposed rearward of the front cover 40 and the inner fender 42. The front frame 12 is disposed between the front cover 40 and the inner cover 44, which join together, the former in the front and the latter in the rear.

The footboard 25 is a platform on which the rider can put his legs. The rider can drive the motorcycle 1 in a relaxed position while putting his legs on the footboard 25. As shown in FIG. 2, the footboard 25 is disposed forward and downward of the seat 24. The footboard 25 is coupled with the lower edge of the inner cover 44.

As shown in FIG. 1, each of the side covers 45 extends downward from the lower edge of the seat 24. The side covers 45 cover an area from near the rear end of the footboard 25 to near the rear end of the vehicle.

A foot cover 46 is attached below a front portion of the seat 24. The foot cover 46 extends downward from the front portion of the seat 24 and covers an area between the seat 24 and the rear end of the footboard 25.

The side covers 45 are supported by the side frames 13. The lower edge of each of the side covers 45 extends rearward and upward above the rear wheel 22. A vertical interspace is provided between the lower edge of the side covers 45 and the rear wheel 22 to allow the rear wheel 22 and the power unit 30 to swing vertically. That is, the lower edge of each of the side covers 45 is positioned at a height where it does not overlap the rear wheel 22 in a side view. A rear fender 47 is attached above the rear wheel 22. The rear fender 47 is attached to an upper portion of the power unit 30 and is vertically swingable together with the rear wheel 22. The lower edge of each of the side covers 45 is formed in such a way that the lower edge of each of the side covers 45 is located above the upper edge of the rear wheel 22 in a side view even when the rear wheel 22 swings upward.

As shown in FIG. 4, the taillight unit 52 is disposed rearward of the side covers 45. The taillight unit 52 is located at the center of, and the rear end of, the vehicle body. The taillight unit 52 is sandwiched by the rear ends of the left and right side covers 45. A flasher 54 is disposed on each of the right and left sides of the taillight unit 52. Each flasher 54 serves as a direction indicator lamp. A rear bar 53 attached to the side covers 45 is disposed above the taillight unit 52. The motorcycle 1 in the present embodiment is a vehicle built for two passengers. A tandem rider sitting on the rear portion of the seat 24 can grip the rear bar 53 during travel.

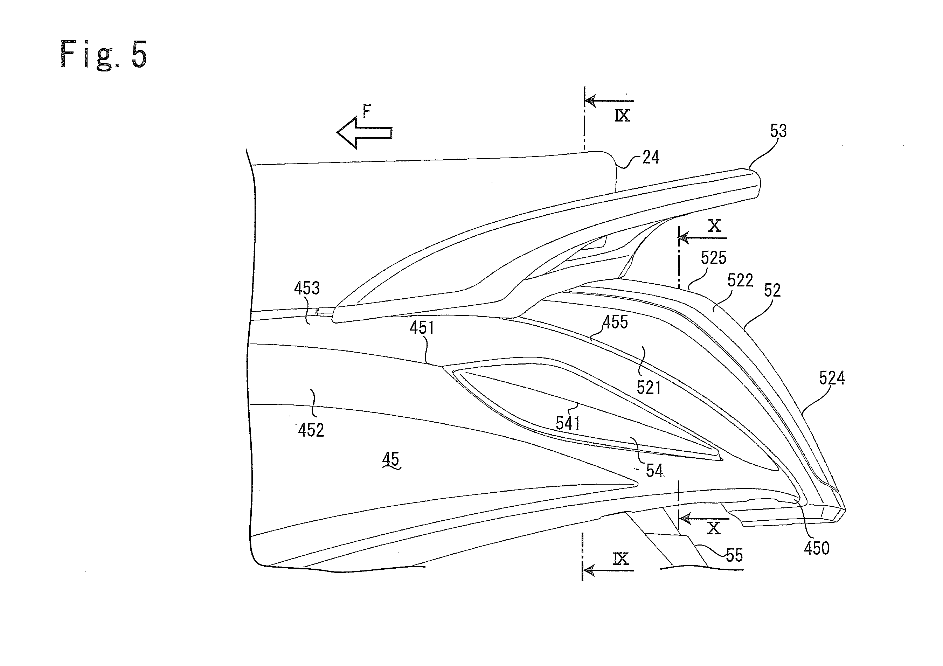

FIG. 5 is a left side view of the rear portion of the motorcycle 1. As discussed above, a taillight unit 52, flashers 54 and a rear bar 53 are provided at the rear portion of the vehicle body. As shown in FIG. 5, the taillight unit 52 protrudes upward of the side covers 45 in the area of the rear ends of the side covers 45. Further, the taillight unit 52 protrudes rearward of the side covers 45 in the area of the rear ends of the side covers 45.

The taillight unit 52 includes left and right side portions 521 extending upward from the borderline 455 between a side cover 45 and the taillight unit, and a topside portion 522 connecting the upper edges of the left and right side portions 521. As shown in FIG. 4, the topside portion 522 is located at the center of the vehicle body. The topside portion 522 becomes wider in the left-right direction as it extends upward. The taillight unit 52 includes parts that constitute the tail light and covers that cover those parts.

As shown in FIG. 4, a reflector 523 is provided at the center of the taillight unit 52 in the left-right direction. The reflector 523 is located on the topside portion 522. Parts of the reflector 523, to the left and right, extend up to the side portions 521. The reflector 523 serves to reflect light received from the outside to indicate the presence of the motorcycle 1 to the outside world at night.

As shown in FIG. 5, the topside portion 522 includes a rear portion 524 extending forward from the rear end of the vehicle body, and a front portion 525 located forward of the rear portion 524 and extending to a position forward of the rear end of the seat 24. In a side view, the inclination of the rear portion 524 relative to the horizontal direction is larger than that of the front portion 525. The width of each side portion 521 in the vertical direction is larger below the rear bar 53 than at the rear end of the vehicle body.

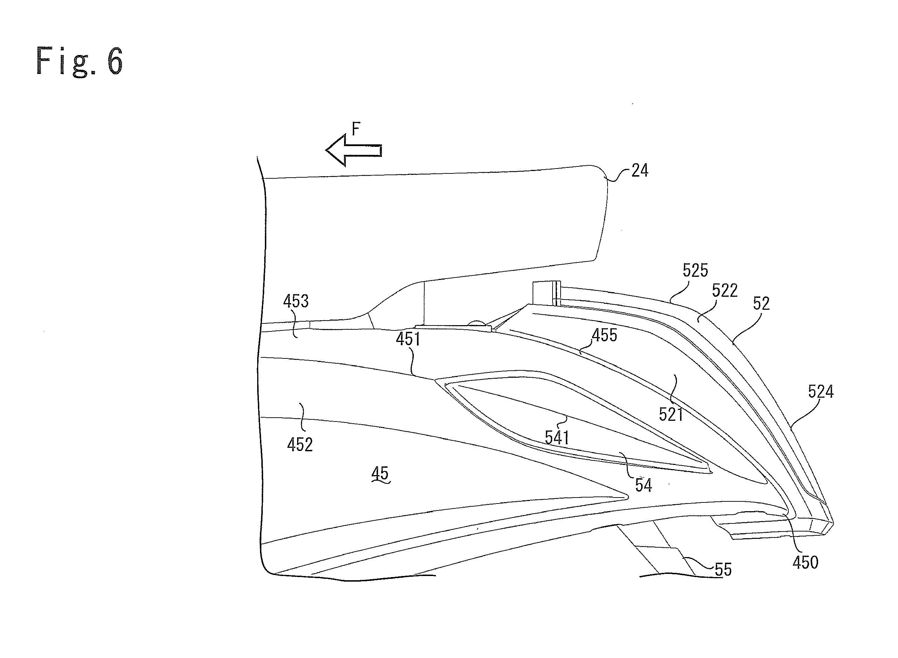

FIG. 6 is a view of the rear portion of FIG. 5 with the rear bar 53 removed. The front portion 525 extends to a position below the seat 24. That is, a rear portion of the seat 24 overlaps a front portion of the taillight unit 52 in a plan view. Thus, the taillight unit 52 is disposed over the entire surfaces of the rear ends of the side covers 45 in the vertical direction. A front portion of the rear bar 53 also extends to a position below the seat 24. That is, a rear portion of the seat 24 overlaps a front portion of the rear bar 53 in a plan view.

Thus, the motorcycle 1 of the present embodiment is configured such that the rear end of each of the side covers 45 extends forward and upward from the lower end 450 of the rear end of the side cover 45. This will achieve a compact rear portion of the vehicle body while a swing range of the rear wheel 22 is ensured and the lower end 450 is positioned at a high level.

The rear end of the seat 24 extends to an area of the upper end of the taillight unit 52. The rear end of the seat 24 extends to an area of the upper ends of the rear ends of the side covers 45 while the width of the rear end of each side cover 45 in the vertical direction is reduced. That is, with the rear end of each side cover 45 extending forward and upward, the seat 24 extends to a position rearward of the front end of the portion which extends forward and upward. Such a structure will ensure a certain length of the seat 24 in the front-rear direction while reducing the width of the rear end of each side cover 45 in the vertical direction to achieve a compact rear portion of the vehicle body.

Further, since the taillight unit 52 is provided over the entire surfaces of the rear ends of the side covers 45 in the vertical direction, a wide area of the taillight unit 52 can be ensured while the width of the rear end of each side cover 45 in the vertical direction is relatively small.

Further, the width of each of the side portions 521 of the taillight unit 52 in the vertical direction is larger below the rear bar 53 than at the rear end of the vehicle body. Thus, the rear bar 53 is easy to grip. Moreover, the width of each of the side portions of the taillight unit 52 in the vertical direction becomes larger as it extends upward. Accordingly, the rear edge of each of the side covers 45 is located more forward, making the rear portion of the vehicle body more compact.

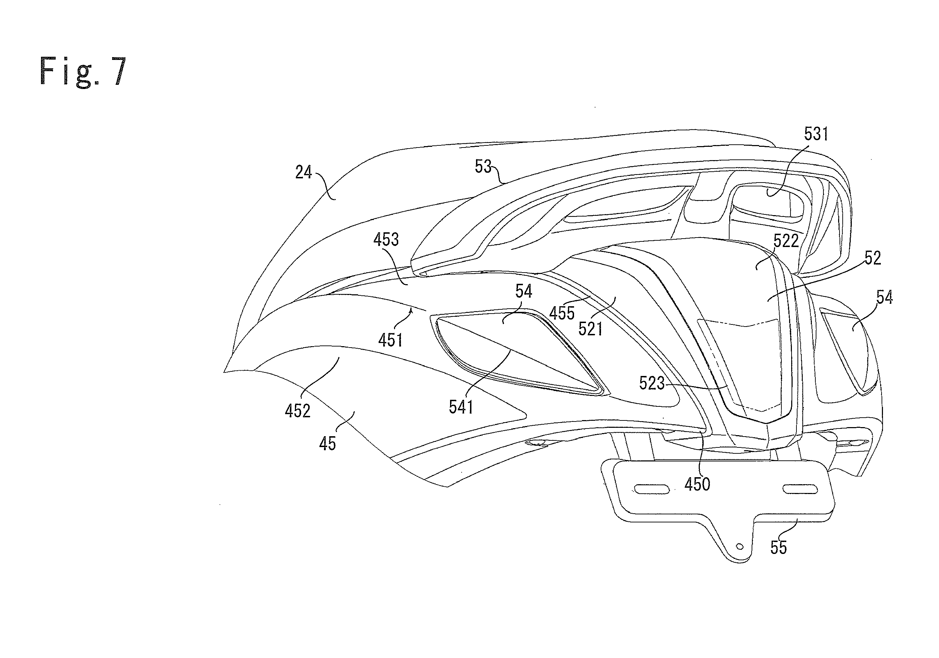

FIG. 7 is a view of the rear portion of the motorcycle 1 as viewed from the left rear of the motorcycle 1. As shown, the rear bar 53 has a pair of grip holes 531, to the left and right. A rider can insert his hand into a grip hole 531 to operate the motorcycle 1.

As shown in FIG. 7, in a side cover 45, the side portion 452 extends in a gentle curve upward and inward in the vehicle width direction. The side cover 45 extends in such a way that its inclination in a rear view varies in the vicinity of the ridge 451 and its inclination relative to the horizontal direction becomes smaller as it extends inward in the vehicle width direction. That is, in a side cover 45, in a rear view the inclination of the side portion 452 relative to the horizontal direction is larger than the inclination of the topside portion 453 relative to the horizontal direction. Next, from a borderline 455 between a side cover 45 and the taillight unit 52, a side portion 521 of the taillight unit 52 extends in such a way that its inclination relative to the horizontal direction becomes larger. Then, the side portion 521 of the taillight unit 52 transitions, at its top end, into the topside portion 522. In the taillight unit 52, in a rear view, the inclination of the side portion 521 relative to the horizontal direction is larger than the inclination of the topside portion 522 relative to the horizontal direction.

Such a structure ensures a wide space below the grip holes 531, making the rear bar 53 easier to grip. Further, since the taillight unit 52 protrudes upward, light emitted from the tail lamp is well visible to the left and right even when the width of the taillight unit 52 to the left and right is reduced. Reducing the width of the taillight unit 52 in the left-right direction will result in a more compact rear portion of the vehicle body. Moreover, as shown in FIG. 4, the width of the rear bar 53 in the left-right direction is larger than the width of the taillight unit 52 in the left-right direction. As such, a sufficient space in the vertical direction is ensured between the rear bar 53 and the side covers 45 at the left and right ends of the rear bar 53, making the rear bar 53 easier to grip for the tandem rider.

As shown in FIG. 7, a license plate bracket 55 is provided below the rear ends of the side covers 45. Thus, the space in which the license plate bracket 55 is disposed is also taken into consideration when the lowermost points 450 of the rear ends of the side covers 45 are determined. Specifically, ensuring a space in which the rear wheel 22 can swing and ensuring a space in which the license plate bracket 55 is disposed are considered when the lowermost points of the rear ends of the side covers 45 are determined.

As shown in FIG. 1, the rear fender 47 is swingable together with the rear wheel 22. Since the rear fender 47 is not attached to the bottom of the side covers 45, the space required below the side covers 45 can be reduced. Minimizing the size of the license plate bracket 55 results in a more compact rear portion of the vehicle body. However, the rear fender may be attached to the bottom of the side covers 45.

The license plate bracket 55 is attached forward of the rear ends of the side covers 45. Thus, the lowermost point of the license plate bracket 55 does not protrude rearward of the area of the rear ends of the side covers 45. This will result in a more compact rear portion of the vehicle body.

As shown in FIG. 4, each side cover 45 includes a side portion 452 located outward of the ridge 451 in the vehicle width direction, and a topside portion 453 located inward of the ridge 451 in the vehicle width direction. That is, the ridge 451 projects most outward in a side cover 45.

As shown in FIG. 5, a flasher 54 is disposed along the ridge 451 of a side cover 45. That is, a flasher 54 is disposed along the contour of the side cover 45 and disposed at the portion of the side cover projecting toward the left or right. Thus, the light emitted from the flasher 54 is well visible. Further, a large space inside the side cover 45 can be ensured to facilitate containing various parts.

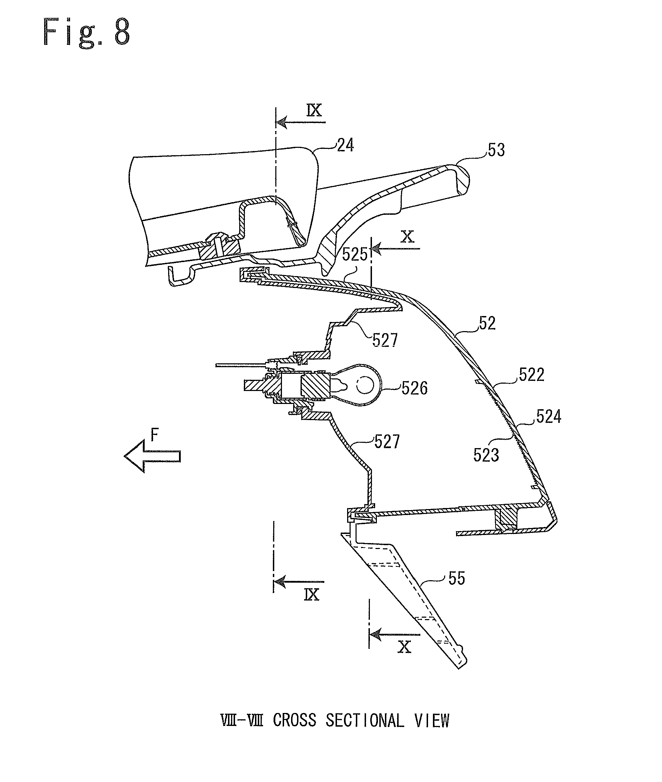

FIG. 8 is a left side cross sectional view of the rear portion of the motorcycle 1. FIG. 8 is a cross section taken along line VIII-VIII of FIG. 4. As shown, a reflector 523 is provided on the rear end of the taillight unit 52. The reflector 523 is formed by providing saw-like notches on the inner surface of the resin plate of the taillight unit 52.

A light bulb 526 is attached to the front portion of the taillight unit 52. The light bulb 526 is surrounded by the reflector 527, to the top and bottom and to the left and right. The reflector 527 is configured to effectively reflect light emitted from the light bulb 526 rearward.

As discussed above, the inclination of the rear portion 524 of the topside portion 522 relative to the horizontal direction in a side view is relatively large. As a result, a sufficient area of the reflector 527 is ensured even above the light bulb 526 to effectively reflect emitted light rearward.

Further, as shown, the base of the light bulb 526 is positioned to overlap the seat 24 in a plan view. Since the taillight unit 52 overlaps of the rear end of the seat 24, the width of the rear end of each side cover 45 in the vertical direction is reduced, while a sufficient length of the seat 24 in the front-rear direction is ensured.

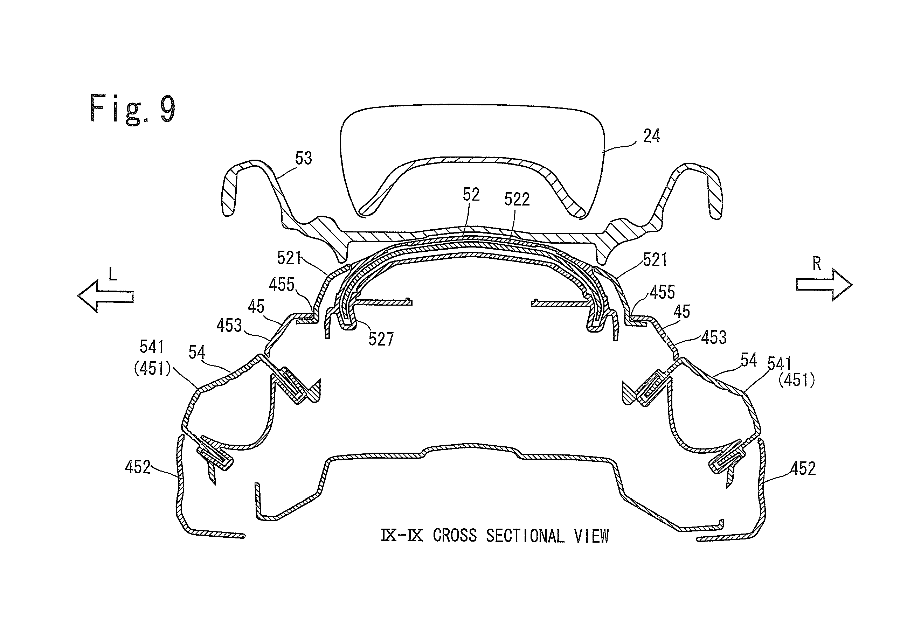

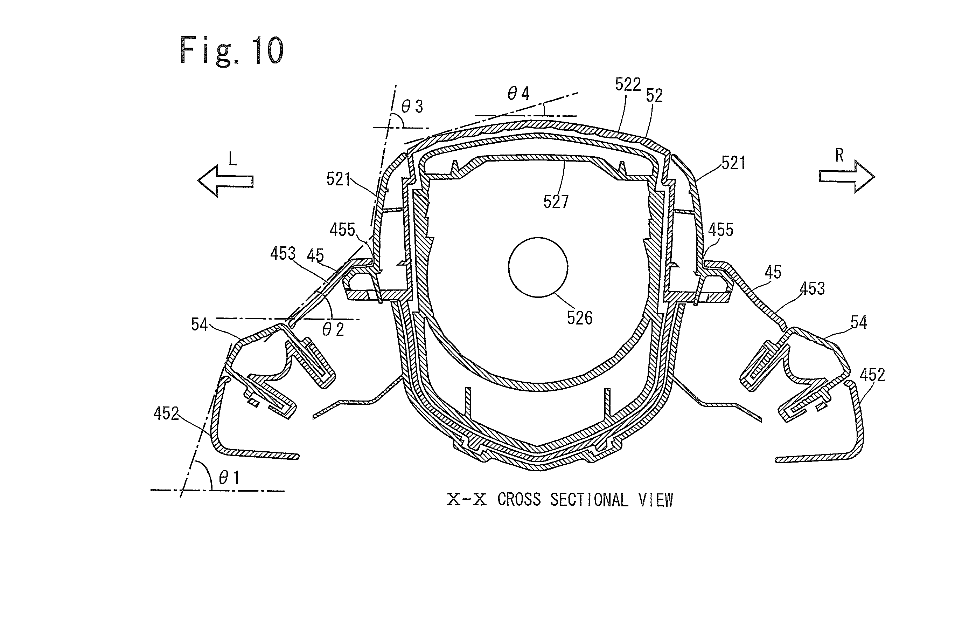

FIG. 9 is a cross sectional view of the rear portion of the vehicle taken along line IX-IX of FIG. 5. FIG. 10 is a cross sectional view of the rear portion of the vehicle taken along line X-X of FIG. 5.

As shown in FIG. 9, the flashers 54 extend outward at the ridges 541. The ridges 541 of the flashers 54 are contiguous with the ridges 451 of the side covers 45, as shown in FIG. 7. Thus, a side cover 45 and a flasher 54 form a uniform contour.

Further, as shown in FIG. 9, a wide space is ensured below the rear bar 53 at the borderlines 455 between the side covers 45 and the taillight unit 52. Thus, the rear bar allows the rider to insert his hand below it and is easy to operate.

Moreover, as shown in FIG. 9, the seat 24 is positioned to overlap the taillight unit 52 in a plan view. Thus, a sufficient length of the taillight unit 52 in the vertical direction can be ensured while reducing the width of the rear ends of the side covers 45 in the vertical direction.

As shown in FIG. 10, the taillight unit 52 protrudes upward from the borderlines 455 between the side covers 45 and the taillight unit. Further, a certain area of the reflector 527 is ensured all around the light bulb 526 to the top and bottom, to the left and right. As discussed above, in each of the side covers 45, the inclination θ1 of the side portion 452 relative to the horizontal direction is larger than the inclination θ2 of the topside portion 453 relative to the horizontal direction in a rear view. In the taillight unit 52, in a rear view, the inclination θ3 of the side portion 521 relative to the horizontal direction is larger than the inclination θ4 of the topside portion 522 relative to the horizontal direction.

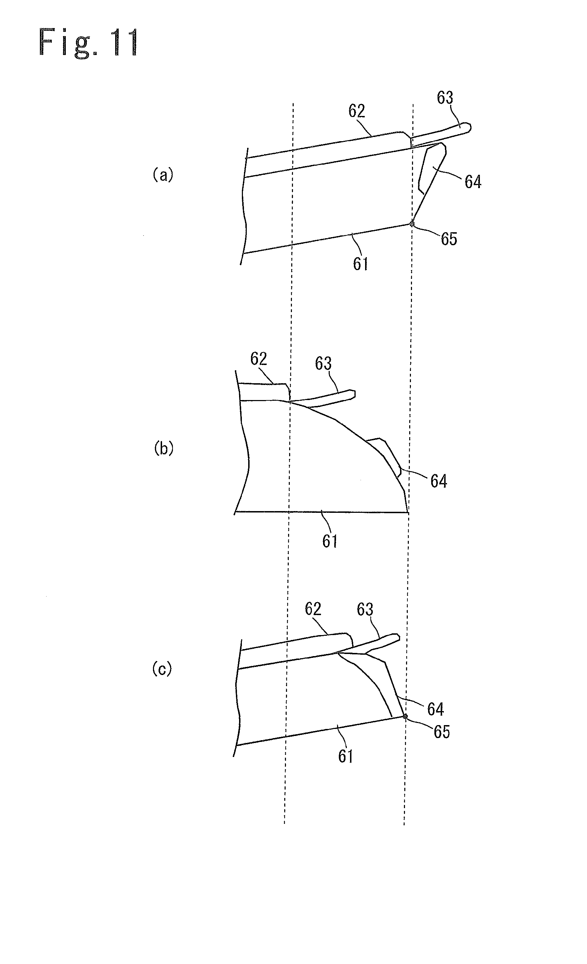

FIG. 11 schematically illustrates features of the motorcycle 1 of the present embodiment. Therein, (a) depicts a type of motorcycle in which the lower edge of each of the side covers is disposed upward to ensure a space in which the rear wheel can swing. In the motorcycle shown in (a), the rear end of each of the side covers extends rearward and upward from the lower end of the rear end of each side cover. The scooter described with reference to JP2005-145202A is of the type shown in (a).

(b) depicts a type of motorcycle where the space in which the rear wheel can swing is contained within the side covers. In the type shown in (b), the lower edge of each of the side covers is located lower than in the type shown in (a). The scooter described with reference to JP2001-310778A is of the type shown in (b).

(c) shows a motorcycle of the present embodiment. FIG. 11's (a), (b), and (c) which depicts the motorcycle of the present embodiment each schematically show one of the side covers 61, a seat 62, a rear bar 63 and a taillight unit 64.

When the type of (c), which depicts the motorcycle of the present embodiment, is compared with the type shown in (a), the lower end 65 of the rear end of the side cover 61 is, in each case, disposed at a height that allows for a swing range of the rear wheel. From this position, in the type shown in (a), the rear end of the side cover 61 extends rearward and upward, resulting in a relatively large rear portion. However, in the motorcycle of the present embodiment, the rear end of the side cover 61 extends forward and upward from the lower end 65, resulting in a relatively compact rear portion.

When the type of (c), which depicts the motorcycle of the present embodiment, is compared with the type shown in (b), the rear end of the side cover 61 extends forward and upward in each case. In the type shown in (b), the space in which the wheel can swing is contained within the side covers 61, such that the rear portion of the side covers 61 extends forward and upward in a curve. As such, the rear end of the seat 62 is located more forward. However, in the motorcycle of the present embodiment, the taillight unit 64 is located rearward of the side cover 61 and the taillight unit 64 overlaps the seat 62 in a plan view. Thus, a certain length of the seat 62 in the front-rear direction is ensured.

Further, in the motorcycle of the present embodiment, the taillight unit 64 is located rearward of the side cover 61 and part of the rear bar 63 is located above the taillight unit 64. The space in the vertical direction between the rear bar 63 and the side cover 61 is larger, making the rear bar easy to grip.

A motorcycle 1 of the present embodiment includes: a seat 24; a rear wheel 22 capable of swinging vertically; left and right and side covers 45 that each cover a vehicle side below the seat 24 and above the rear wheel 22. The motorcycle 1 further includes: a license plate bracket 55 that extends downward from lower edges of the side covers 45; a taillight unit 52 disposed rearward of rear ends of the left and right side covers 45; and a rear bar 53 disposed at least in part rearward of the seat 24 and at least in part above the taillight unit 52. Each of the lower edges of the rear ends of the side covers 45 is positioned at a height where it does not overlap the rear wheel 22 in a side view. Each of the rear ends of the side covers 45 extends forward and upward from the lower end 450 of the rear end in a side view. A rear portion of the seat 24 overlaps a front portion of the taillight unit 52.

A compact rear portion of the vehicle body can be achieved while the lower edge of each side cover 45 can be positioned at a height where it does not overlap the rear wheel 22 in a side view. A sufficient area of the taillight unit 52 can be ensured while the rear portion of the vehicle body remains relatively compact. Moreover, a large length of the seat in the front-rear direction can be ensured while the rear portion of the vehicle body remains relatively compact.

In the motorcycle 1 of the present embodiment, at least a part of the rear bar 53 overlaps the seat 24 in a plan view. It will ensure a certain length of the seat 24 in the front-rear direction.

In the motorcycle 1 of the present embodiment, a width of the rear bar 53 in a vehicle width direction is larger than a width of the taillight unit 52 in the vehicle width direction. At the left and right ends of the rear bar 53, a space in the vertical direction between the rear bar 53 and the side covers 45 is relatively large. Thus, it is easy for a tandem driver 53 to grip the rear bar 53.

In the motorcycle 1 of the present embodiment, the seat 24 extends to a position rearward of a front end of a portion of each of the side covers 45 that extends forward and upward from a lower end of the rear end of the side cover. It will increase the length of the seat 24 in the front-rear direction while reducing the size of the rear portion of the vehicle body.

In the motorcycle 1 of the present embodiment, the taillight unit 52 extends to a vicinity of a lower end of a rear end of each of the side covers 45. It will ensure a certain area of the taillight unit 52 while making the rear portion of the vehicle body more compact.

In the motorcycle 1 of the present embodiment, the license plate bracket 55 is disposed forward of a rear end of each of the side covers 45. The lower end of the license plate bracket 55 can be contained forward of the lower end 450 of the rear end of each side cover 45, and thus the rear portion of the vehicle body can be made more compact.

In the motorcycle 1 of the present embodiment, each of the side covers 45 includes a ridge 451 extending in a front-rear direction of the vehicle, and the side cover 45 includes a side portion 452 located below the ridge 451 and a topside portion 453 located above the ridge 451. The taillight unit 52 includes a topside portion 522 and side portions 521 extending forward and upward. The side portions 521 of the taillight unit 52 are disposed between the topside portion 522 of the taillight unit 52 and topside portions 451 of the side covers 45. In a rear view, the inclination θ3 of each of the side portions 521 of the taillight unit 52 relative to a horizontal direction is larger than the inclination θ2 of each of the topside portions 453 of the side covers 45 relative to the horizontal direction. It will ensure a space for a hand to grip the rear bar 53 and make the rear bar 53 easy to operate.

In the motorcycle 1 of the present embodiment, in the taillight unit 52, an inclination of a rear portion relative to a horizontal direction is larger than an inclination of a front portion relative to the horizontal direction in a side view. That is, the inclination of the rear portion 524 relative to the horizontal direction is larger than the inclination of the front portion 525 relative to the horizontal direction in a side view. It will ensure a large area of a reflector 527 mounted on the inside of the taillight unit 52 to effectively reflect emitted light. Specifically, a certain area of the reflector 527 can be ensured above the light bulb 526.

In the motorcycle 1 of the present embodiment, each of the side covers 45 includes a ridge 451 extending in a front-rear direction of the vehicle. The side cover 45 includes a side portion 452 located below the ridge 451 and a topside portion 453 located above the ridge 451. In a rear view, the inclination of the side portion 452 relative to the horizontal direction is larger than the inclination of the topside portion 453 relative to the horizontal direction, and a flasher 54 is disposed at a position along the ridge 451. It will allow a flasher 54 to be disposed to protrude to the left and right in the vehicle width direction. It will make light emitted from a flasher 54 easy to notice.

The motorcycle 1 of the present embodiment includes a rear fender 47 covering the rear wheel 22 and swingable in the vertical direction together with the rear wheel 22. Since only the license plate bracket 55 is disposed below the side cover 45, a compact rear portion of the vehicle body can be achieved.

The motorcycle 1 of the present embodiment is provided with a reflector 523 in a region of the taillight unit 52, the reflector capable of reflecting light from outside. It will provide functions of a reflector without increasing the size of the rear portion of the vehicle body.

## Claims

1. A motorcycle (1) comprising:
a seat (24) for a rider to sit thereon;
a rear wheel (22) capable of swinging in a vertical direction;
a side cover (45) that covers a vehicle side below the seat (24) and above the rear wheel (22);
a license plate bracket (55) that extends downward from a lower edge of the side cover (45);
a taillight unit (52) disposed rearward of a rear end (455) of the side cover (45); and
a rear bar (53) disposed at least in part rearward of the seat (24) and at least in part above the taillight unit (52),
wherein the lower edge of the side cover (45) is positioned at a height where it does not overlap the rear wheel (22) in a side view, and the rear end (455) of the side cover (45) extends forward and upward from the lower end (450) of the rear end (455) in a side view, and a rear portion of the seat (24) overlaps a front portion of the taillight unit (52) in a plan view,
the side cover (45) includes a ridge (451) extending in a front-rear direction of the vehicle;
the side cover (45) includes a side portion (452) located below the ridge (451) and a topside portion (453) located above the ridge (451);
the taillight unit (52) includes a topside unit portion (522) extending forward and upward and a side unit portion (521),
**characterized in that**
the side unit portion (521) is disposed between the topside unit portion (522) and the topside portion (453); and
in a rear view, an inclination of the side unit portion (521) relative to a horizontal direction is larger than an inclination of the topside portion (453) relative to the horizontal direction; and
a width of the rear bar (53) in a vehicle width direction is larger than a width of the taillight unit (52) in the vehicle width direction.

2. The motorcycle according to claim 1, wherein:
at least a part of the rear bar (53) overlaps the seat (24) in a plan view.

3. The motorcycle according to any one of claims 1 or 2, wherein:
the seat (24) extends to a position rearward of a front end of a portion of the side cover (45) that extends forward and upward from the lower end (450) of the rear end (455) of the side cover (45).

4. The motorcycle according to any one of claims 1 to 3, wherein:
the taillight unit (52) extends to a vicinity of the lower end (450) of the rear end (455) of the side cover (45).

5. The motorcycle according to any one of claims 1 to 4, wherein:
the license plate bracket (55) is disposed forward of the rear end (455) of the side cover (45).

6. The motorcycle according to any one of claims 1 to 5, wherein:
in a rear view, the inclination of the side portion (452) relative to the horizontal direction is larger than the inclination of the topside portion (453) relative to the horizontal direction; and
a flasher (54) is disposed at a position along the ridge (451).

7. The motorcycle according to any one of claims 1 to 6, wherein:
in the taillight unit (52), an inclination of a rear portion (524) relative to a horizontal direction is larger than an inclination of a front portion (525) relative to the horizontal direction in a side view.

8. The motorcycle according to any one of claims 1 to 7, further comprising:
a rear fender (47) covering the rear wheel (22) and swingable in the vertical direction together with the rear wheel (22).

9. The motorcycle according to any one of claims 1 to 8, wherein:
a reflector (523) is provided in a region of the taillight unit (52), the reflector (523) capable of reflecting light from outside.

## Patentansprüche

1. Ein Motorrad (1), das folgende Merkmale aufweist:
einen Sitz (24), auf dem ein Fahrer sitzen kann;
ein Hinterrad (22), das in einer Vertikalrichtung schwenken kann;
eine Seitenabdeckung (45), die eine Fahrzeugseite unter dem Sitz (24) und über dem Hinterrad (22) abdeckt;
eine Nummernschildhalterung (55), die sich von einer Unterkante der Seitenabdeckung (45) nach unten erstreckt;
eine Rücklichteinheit (52), die hinter einem hinteren Ende (455) der Seitenabdeckung (45) angeordnet ist; und
eine hintere Stange (53), die zumindest teilweise hinter dem Sitz (24) und zumindest teilweise über der Rücklichteinheit (52) angeordnet ist,
wobei die Unterkante der Seitenabdeckung (45) an einer Höhe positioniert ist, wo dieselbe in einer Seitenansicht nicht mit dem Hinterrad (22) überlappt, und das hintere Ende (455) der Seitenabdeckung (45) sich in einer Seitenansicht von dem unteren Ende (450) des hinteren Endes (455) nach vorne und oben erstreckt, und ein hinterer Abschnitt des Sitzes (24) in einer Draufsicht einen vorderen Abschnitt der Rücklichteinheit (52) überlappt,
die Seitenabdeckung (45) einen Wulst (451) umfasst, der sich in einer Richtung des Fahrzeugs von vorne nach hinten erstreckt;
die Seitenabdeckung (45) einen Seitenabschnitt (452) umfasst, der unter dem Wulst (451) angeordnet ist, und einen oberen Abschnitt (453), der über dem Wulst (451) angeordnet ist;
die Rücklichteinheit (52) einen Oberseiteneinheitsabschnitt (522) umfasst, der sich nach vorne und oben erstreckt, und einen Seiteneinheitsabschnitt (521),
**dadurch gekennzeichnet, dass**
der Seiteneinheitsabschnitt (521) zwischen dem Oberseiteneinheitsabschnitt (522) und dem Oberseitenabschnitt (453) angeordnet ist; und
in einer Rückansicht eine Neigung des Seiteneinheitsabschnitts (521) relativ zu einer Horizontalrichtung größer ist als eine Neigung des Oberseitenabschnitts (453) relativ zu der Horizontalrichtung; und
eine Breite der hinteren Stange (53) in einer Fahrzeugbreiterichtung größer ist als eine Breite der Rücklichteinheit (52) in der Fahrzeugbreiterichtung.

2. Das Motorrad gemäß Anspruch 1, bei dem:
zumindest ein Teil der hinteren Stange (53) den Sitz (24) in einer Draufsicht überlappt.

3. Das Motorrad gemäß einem der Ansprüche 1 oder 2, bei dem
der Sitz (24) sich zu einer Position hinter einem vorderen Ende eines Abschnitts der Seitenabdeckung (45) erstreckt, der sich von dem unteren Ende (450) des hinteren Endes (455) der Seitenabdeckung (45) nach vorne und oben erstreckt.

4. Das Motorrad gemäß einem der Ansprüche 1 bis 3, bei dem
die Rücklichteinheit (52) sich zu einer Umgebung des unteren Endes (450) des hinteren Endes (455) der Seitenabdeckung (45) erstreckt.

5. Das Motorrad gemäß einem der Ansprüche 1 bis 4, bei dem
die Nummernschildhalterung (55) vor dem hinteren Ende (455) der Seitenabdeckung (45) angeordnet ist.

6. Das Motorrad gemäß einem der Ansprüche 1 bis 5, bei dem in einer Rückansicht die Neigung des Seitenabschnitts (452) relativ zu der Horizontalrichtung größer ist als die Neigung des Oberseitenabschnitts (453) relativ zu der Horizontalrichtung; und
ein Blinker (54) an einer Position entlang des Wulsts (451) angeordnet ist.

7. Das Motorrad gemäß einem der Ansprüche 1 bis 6, bei dem:
in der Rücklichteinheit (52) eine Neigung eines hinteren Abschnitts (524) relativ zu einer horizontalen Richtung größer ist als eine Neigung eines vorderen Abschnitts (552) relativ zu der Horizontalrichtung in einer Seitenansicht.

8. Das Motorrad gemäß einem der Ansprüche 1 bis 7, das ferner Folgendes aufweist:
ein hinteres Schutzblech (47), das das Hinterrad (52) bedeckt und zusammen mit dem Hinterrad (22) in der vertikalen Richtung schwenkbar ist.

9. Das Motorrad gemäß einem der Ansprüche 1 bis 8, bei dem
ein Reflektor (523) in einer Region der Rücklichteinheit (52) vorgesehen ist, wobei der Reflektor (523) in der Lage ist, Licht von außen zu reflektieren.

## Revendications

1. Motocyclette (1) comprenant:
un siège (24) pour qu'un conducteur puisse s'y assoir;
une roue arrière (22) à même d'osciller dans une direction verticale;
un couvercle latéral (45) qui recouvre un côté du véhicule au-dessous du siège (24) et au-dessus de la roue arrière (22);
un support de plaque d'immatriculation (55) qui s'étend vers le bas depuis un bord inférieur du couvercle latéral (45);
une unité de feu arrière (52) disposée à l'arrière d'une extrémité arrière (455) du couvercle latéral (45); et
une barre arrière (53) disposée au moins en partie à l'arrière du siège (24) et au moins en partie au-dessus de l'unité de feu arrière (52),
dans lequel le bord inférieur du couvercle latéral (45) est positionné à une hauteur où il ne vient pas en recouvrement avec la roue arrière (22) en vue latérale, et l'extrémité arrière (455) du couvercle latéral (45) s'étend vers l'avant et vers le haut à partir de l'extrémité inférieure (450) de l'extrémité arrière (455) en vue latérale, et une partie arrière du siège (24) vient en recouvrement avec une partie avant de l'unité de feu arrière (52) en vue en plan,
le couvercle latéral (45) comporte une arête (451) s'étendant dans une direction avant-arrière du véhicule;
le couvercle latéral (45) comporte une partie latérale (452) située au-dessous de l'arête (451) et une partie du côté supérieur (453) située au-dessus de l'arête (451);
l'unité de feu arrière (52) comporte une partie d'unité supérieure (522) s'étendant vers l'avant et vers le haut et une partie d'unité latérale (521),
**caractérisée par le fait que**
la partie d'unité latérale (521) est disposée entre la partie d'unité supérieure (522) et la partie supérieure (453); et
en vue arrière, une inclinaison de la partie d'unité latérale (521) par rapport à une direction horizontale est plus grande qu'une inclinaison de la partie supérieure (453) par rapport â la direction horizontale; et
une largeur de la barre arrière (53) dans un sens de la largeur du véhicule est supérieure à une largeur de l'unité de feu arrière (52) dans le sens de la largeur du véhicule.

2. Motocyclette selon la revendication 1, dans laquelle:
au moins une partie de la barre arrière (53) vient en recouvrement avec le siège (24) en vue en plan.

3. Motocyclette selon l'une quelconque des revendications 1 ou 2, dans laquelle:
le siège (24) s'étend jusqu'à une position à l'arrière d'une extrémité avant d'une partie du couvercle latéral (45) qui s'étend vers l'avant et vers le haut depuis l'extrémité inférieure (450) de l'extrémité arrière (455) du couvercle latéral (45).

4. Motocyclette selon l'une quelconque des revendications 1 à 3, dans laquelle:
l'unité de feu arrière (52) s'étend jusqu'à un voisinage de l'extrémité inférieure (450) de l'extrémité arrière (455) du couvercle latéral (45).

5. Motocyclette selon l'une quelconque des revendications 1 à 4, dans laquelle:
le support de plaque d'immatriculation (55) est disposé en avant de l'extrémité arrière (455) du couvercle latéral (45).

6. Motocyclette selon l'une quelconque des revendications 1 à 5, dans laquelle:
en vue arrière, l'inclinaison de la partie latérale (452) par rapport à 1a direction horizontale est plus grande que l'inclinaison de la partie supérieure (453) par rapport à la direction horizontale; et
un clignoteur (54) est disposé en une position le long de l'arête (451).

7. Motocyclette selon l'une quelconque des revendications 1 à 6, dans laquelle:
dans l'unité de feu arrière (52), une inclinaison d'une partie arrière (524) par rapport à une direction horizontale est plus grande que l'inclinaison d'une partie avant (525) par rapport à la direction horizontale en vue latérale.

8. Motocyclette selon l'une quelconque des revendications 1 à 7, comprenant par ailleurs:
un garde-boue arrière (47) recouvrant la roue arrière (22) et pouvant osciller dans la direction verticale ensemble avec la roue arrière (22).

9. Motocyclette selon l'une quelconque des revendications 1 à 8, dans laquelle:
un réflecteur (523) est prévu dans une région de l'unité de feu arrière (52), le réflecteur (523) étant à même de réfléchir la lumière de l'extérieur.
